# EUROPEAN PATENT SPECIFICATION

(11) **EP 3 861 829 B1**
(45) Date of publication and mention of the grant of the patent: **10.12.2025**
(21) Application number: 19752529.8
(22) Date of filing: 14.08.2019
(51) Int. Cl.: H04W 88/04, H04W 28/02, H04W 72/12, H04W 4/40, H04W 24/10, H04W 76/14

(54) **SIDELINK DEVICE FOR PROVIDING SIDELINK QUALITY OF SERVICE INFORMATION**
SIDELINK-VORRICHTUNG ZUR BEREITSTELLUNG VON INFORMATIONEN ÜBER SIDELINK-DIENSTGÜTE
DISPOSITIF DE LIAISON LATÉRALE PERMETTANT DE FOURNIR DES INFORMATIONS DE QUALITÉ DE SERVICE DE LIAISON LATÉRALE

(30) Priority: 02.11.2018 WO PCT/EP2018/080044
(43) Date of publication of application: 11.08.2021
(73) Proprietor: Huawei Technologies Co., Ltd., Shenzhen, Guangdong 518129 (CN)
(72) Inventor: SPAPIS, Panagiotis, 80992 Munich (DE); SACRISTÁN, David Martín, 46022 València (ES); MONSERRAT, Jose Francisco, 611731 València (ES); KOUSARIDAS, Apostolos, 80992 Munich (DE)
(74) Representative: Epping - Hermann - Fischer
(86) International application number: PCT/EP2019/071872
(87) International publication number: WO 2020/088815

(56) References cited:
- EP-A1- 3 273 634
- WO-A1-2018/085568
- WO-A1-2018/175553
- ASIYA KHAN ET AL: "QoS Assessment and Modelling of Connected Vehicle Network within Internet of Vehicles", 26 September 2018 (2018-09-26), pages 1 - 11, XP055610225, Retrieved from the Internet <URL:http://www.iariajournals.org/software/> [retrieved on 20190801]

## Description

### TECHNICAL FIELD

The present disclosure relates to the field of mobile communication and to ensuring quality of service (QoS). In particular, the present disclosure relates to sidelink mobile communication and, more particularly, to vehicle to anything (V2X) services.

### BACKGROUND

In the prior art, there are several types of V2X services, e.g. "broadcast periodic" (Common Awareness Messages (CAM)) or "non-periodic" applications (Decentralized Environmental Notification Messages (DENM)), or "session-based" V2X services (Cooperative Lane Merging (CLM), Cooperative Collision Avoidance (CCA), Cooperative Sensing, etc.) with different delay, capacity and reliability requirements as well as with different transmission modes (i.e. broadcast, multicast, unicast). Sidelink vehicle to vehicle (V2V) communication has demanding key performance indicators for many types of V2X services, especially safety and advanced driving. Thus, there is a need for complete QoS support in new radio (NR) sidelink, including QoS monitoring for 5G V2V broadcast/multicast/unicast transmission to support the demanded KPIs.

According to 3GPP TS 22.186, there is a need for optimizing multicast and unicast communication between user equipments (UEs) to support the demanding communication requirements, which many V2X use cases have (cf. 3GPP TS 22.186: *The 3GPP system shall be able to optimize the communication between UEs supporting V2X application belonging to the same group and in proximity*.)

NR V2X sidelink communication in particular needs to support a complete QoS framework including QoS parameters such as latency, reliability, priority, bit rate, etc.

That is, in the field of sidelink communication, and in particular in the field of V2X, there is a need for a sidelink QoS feedback mechanism, which enables a UE to measure and report QoS metrics which the UE actually experiences in sidelink communication, as part of a sidelink QoS framework.

In long term evolution (LTE) V2X, there is no mechanism of QoS monitoring and feedback in sidelink communication. In current sidelink QoS frameworks (ProSe Per-Packet Priority (PPPP) / ProSe Per-Packet Reliability (PPPR) based), there is no monitoring or consideration of sidelink QoS information of broadcast/multicast transmissions (cf. 3GPP TS 23.285).

The existing Channel Busy Ratio (CBR) reporting mechanism may not be sufficient from a QoS perspective, as it can only indicate a rough channel occupation status but cannot directly indicate the actual QoS experienced in sidelink or allow a direct comparison between the QoS actually experienced by a UE and the NR V2X QoS requirements specified for the respective eV2X scenarios (cf. 3GPP TS 36.214).

Uu-based reporting/monitoring means schemes are not useful to know QoS experienced by users in PC5-based multicast/broadcast (cf. 3GPP TS 36.331). These means. e.g. Hybrid Automatic Repeat Request (HARQ) ACKs, are not sent to a base station (BS) in PC5 (thus Uu unicast signaling is not useful). Compared to Uu multicast/broadcast, in PC5, the Block Error Ratio (BLER) reporting scheme should not consider Multicast Broadcase Single Frequency Network (MBSFN) areas and Multicast Channel (MCH) channels, but to provide range-related information and distinguish between different transmitters.

That is, in view of the above-mentioned drawbacks of the prior art, there is a need for a mechanism for enabling sidelink QoS.

Document WO 2018/085568 A1 describes an apparatus of a user equipment, UE, wherein the apparatus comprises one or more processors to encode or decode data to be sent to or to be received from an evolved NodeB (eNB) via a relay UE over a sidelink interface at a specified quality of service (QoS) if the UE is in proximity to the relay UE and if the UE is out of coverage with the eNB. According to this document, a Secure User Plane Location Platform which is a node is used to detect the user location or its proximity area. The specified QoS can comprise a default QoS if the relay UE indicates it only supports the default QoS. The specified QoS can comprise a level of QoS that the relay UE indicates it is capable of supporting. It is possible that one or more baseband processors are to generate a solicitation request message for the relay UE regarding a requested level of QoS at which the data is to be sent, and to process a solicitation response message from the UE indicating if the request level of QoS is supported. The sidelink interface comprises a PC5 interface that is capable of supporting proximity-based services (ProSe) or device-to-device (D2D) communication over the sidelink. The specified QoS includes proximity- based services (ProSe)-Per-Packet-Priority (PPPP) information or QoS Class Identifier (QCI) information, or a combination thereof.

Document EP 3 273 634 A1 relates to a transmitting device for transmitting vehicular data via a sidelink interface to one or more receiving devices. The transmitting device performs autonomous radio resource allocation for transmitting the vehicular data via the sidelink interface. An application layer generates the vehicular data and forwards the vehicular data together with a priority indication and one or more quality of service parameters to a transmission layer responsible for transmission of the vehicular data via the sidelink interface. The transmission layer performs autonomous radio resource allocation based on the received priority indication and the one or more quality of service parameters. The transmission layer transmits the vehicular data via the sidelink interface to the one or more receiving devices according to the performed autonomous radio resource allocation.

Asiya Khan et al. describes in "QoS Assessment and Modelling of Connected Vehicle Network within Internet of Vehicles" connected vehicles and analyzes factors that impact the Quality of Service, QoS, of connected vehicles. According to this document, parameters such as the distance between vehicles, road-side sensors and the speed of the vehicle may play an important part towards the QoS of the V2x network which integrates connected vehicles into an IoT ecosystems.

Document WO 2018/175553 A1 describes Generation Node-B (gNB), User Equipment (UE) and methods for communication. The gNB may allocate a resource pool of physical resource blocks (PRBs) and sub-frames for vehicle-to-vehicle (V2V) sidelink transmissions. The gNB may receive, from a UE, an uplink control message that indicates that the UE requests a V2V sidelink transmission of a prioritized message. The gNB may select, for the V2V sidelink transmission of the prioritized message, one or more PRBs and one or more sub-frames. The gNB may transmit, to the UE and to other UEs, a downlink control message that indicates: the selected PRBs, the selected sub-frames, and that the other UEs are to mute sidelink transmissions in the selected PRBs in the selected sub-frames to enable the V2V sidelink transmission of the prioritized message. The SCI signaling may include frequency' resource location information. For instance, a set of frequency sub-channels, sub-bands or physical resource blocks (PRBs) may be indicated. The SCI signaling may include location information. For instance, the location information may include absolute or relative coordinate of UE, a zone ID, a radius in which UEs are supposed to mute transmission and/or other information.

### SUMMARY

In view of the above-mentioned problems and disadvantages, the present disclosure aims to improve the conventional sidelink communication.

The present invention is set out by the set of appended claims. In the following, parts of the description and drawing referring to examples or implementations, which are not covered by the claims are not presented as embodiments of the invention, but as illustrative examples useful for understanding the invention. The embodiments of the invention are provided by the appended claims.

The present disclosure has the object to provide a sidelink device and method for providing sidelink QoS information, as well as a corresponding sidelink control device and method for providing sidelink QoS metrics.

The present disclosure in particular allows for optimizing sidelink communication (e.g. V2X communication) and for guaranteeing reliable sidelink communication, and if necessary, providing feedback to a network for potential adjustment of a QoS related configuration and/or policy.

In other words, an important aspect of the present disclosure is a way to enable sidelink QoS monitoring and feedback, in particular for V2X services, considering unicast, multicast and broadcast sidelink communications. According to the invention, a sidelink control device can enable sidelink QoS monitoring with or without a prior request from a UE or an application entity. The sidelink control device can configure sidelink QoS monitoring at the sidelink device, according to a type of a service (e.g. a V2X service), based on sidelink QoS metrics and monitoring goals. In addition, a sidelink device, and in particular a vehicle, can monitor and report sidelink QoS related information and/or sidelink QoS metrics to the sidelink control device, in particular based on a configuration received from the network. The present disclosure enables that a sidelink QoS metric can be calculated either at the sidelink control device, which is collecting QoS related information and/or sidelink QoS metrics from sidelink devices, or directly at the sidelink device.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific examples, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above-described aspects and implementation forms of the present disclosure will be explained in the following description of specific examples in relation to the enclosed drawings, in which
- FIG. 1: shows a schematic view of a sidelink device according to an example of the present disclosure.
- FIG. 2: shows a schematic view of parameters that affect a monitoring configuration.
- FIG. 3: shows a schematic view of modes of monitoring activation according to the present disclosure.
- FIG. 4: shows a schematic view of an operating manner according to the present disclosure.
- FIG. 5: shows a schematic view of an operating manner according to the present disclosure.
- FIG. 6: shows a schematic view of reporting information according to the present disclosure.
- FIG. 7: shows a schematic view of sidelink QoS information report components according to the present disclosure.
- FIG. 8: shows a schematic view of inter-cell interaction for sidelink metrics calculation according to the present disclosure.
- FIG. 9: shows a schematic view of core network calculation of sidelink QoS metrics according to the present disclosure.
- FIG. 10: shows a schematic view of network case calculation of QoS metrics.
- FIG. 11: shows a schematic view of a method according to an example of the present disclosure.
- FIG. 12: shows a schematic view of a sidelink control device according to an example of the present disclosure.
- FIG. 13: shows a schematic view of a method according to an example of the present disclosure.
- FIG. 14: shows a schematic view of an operating manner according to an example of the present disclosure.

### DETAILED DESCRIPTION

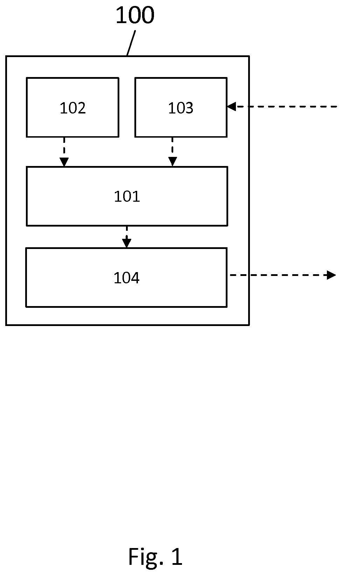

FIG. 1 shows a schematic view of a sidelink device 100 according to an example of the present disclosure. The sidelink device 100 is for providing sidelink QoS information 101.

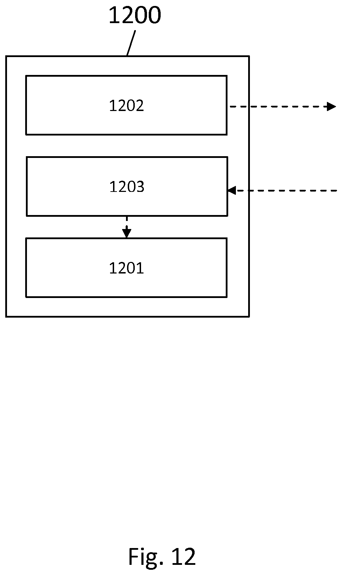

To ensure this, the sidelink device 100 is configured to obtain the sidelink QoS information 101 based on a pre-configuration 102 and/or a measurement request 103 and/or a connection establishment configuration. The pre-configuration 102 can be pre-stored in the sidelink device 100 by any communication means and memory means available to the sidelink device 100. The measurement request 103 and/or a connection establishment configuration is obtained from at least one of a network device, an operator-independent device, a sidelink device. Such a device can e.g. be the sidelink control device 1200, which is going to be described in view of FIG. 12 below. That is, the sidelink control device 1200 can e.g. be a network device, an operator-independent device, and/or a sidelink device.

To provide the sidelink QoS information 101, the sidelink device 100 is further configured to provide information 104 based on the sidelink QoS information 101 to at least one of a network device, an operator-independent device, a sidelink device. Again, this can be the sidelink control device 1200. The information 104 can also be the sidelink QoS information 101 as such.

The obtaining of the sidelink QoS information 101 can optionally be based on sidelink communication. In particular, to obtain the sidelink QoS information 101, the sidelink device 100 optionally can monitor any type of sidelink communication that is transmitted, received, and/or observed at the sidelink device 100. The sidelink communication optionally can e.g. be of a multicast, unicast, and/or broadcast type.

The sidelink device 100 can provide sidelink QoS information 101 to the sidelink control device 1200, so that the sidelink control devices 1200 determines sidelink QoS metrics from the sidelink QoS information 101. However, further optionally, the sidelink device 100 can also directly determine sidelink QoS metrics and provide them to the sidelink control device 1200. These sidelink control metrics can e.g. be determined according to the measurement request 103 that is received from the sidelink control device 1200 and/or based on a pre-configuration of the sidelink device 100 and/or a connection establishment configuration.

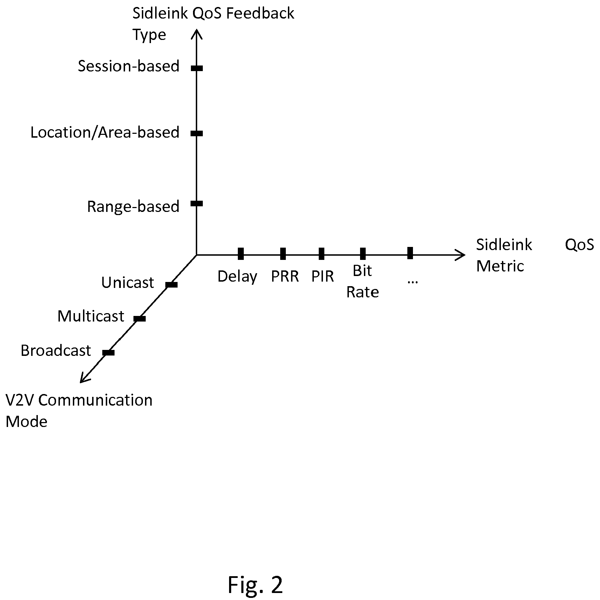

As it is e.g. illustrated in view of FIG.2, different parameters can affect sidelink QoS and in particular V2V communication. Different sidelink services (in particular V2X services) and optimization goals require different sidelink QoS metrics to be monitored or calculated, and consequently information to be reported by the sidelink device 100. A sidelink control device 1200 can configure the reporting and feedback based on a type of a sidelink service (e.g. a V2X service) and a purpose of monitoring e.g. QoS notification, or prediction of QoS. FIG.2 presents parameters that affect a monitoring configuration (which is e.g. signaled in a measurement request 103 and/or a connection establishment configuration). The measurement request 103 and/or a connection establishment configuration therefore can be related to a specific service (e.g. a V2X service), that is operated by the sidelink device 100 and/ or the sidelink control device 1200.

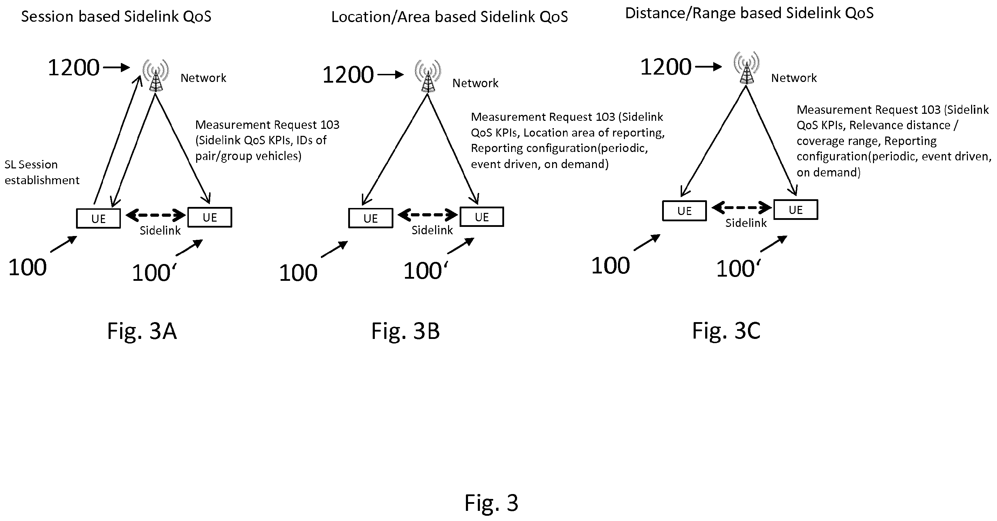

FIG. 3 shows a schematic view of modes of monitoring activation according to the present disclosure. As it is illustrated in particular in FIG. 3A, 3B and 3C, the sidelink control device 1200 (e.g. a BS) can enable and configure sidelink QoS monitoring and reporting at the sidelink devices 100, 100', considering a NR sidelink QoS metric to be calculated, a V2X service, a type of transmission (broadcast, unicast, multicast), and/or a type of feedback, e.g. relation of a sidelink device 100 to a sidelink session, to a target area, or a range from the sidelink device 100 to another device.

FIG. 3 also describes the general case of configuration of a sidelink device 100, 100' by a sidelink control device 1200 (e.g. in a 5G system) for three alternative type of QoS feedback for sidelink communication: session-based sidelink QoS, location/area based sidelink QoS, distance/range based sidelink QoS.

For each one of the above types, a measurement request 103 message is sent by the sidelink control device 1200 with different parameters that configure the reporting at the sidelink devices 100, 100'. Distance/range based QoS can be also provided in the context of a session or at a specific location/area.

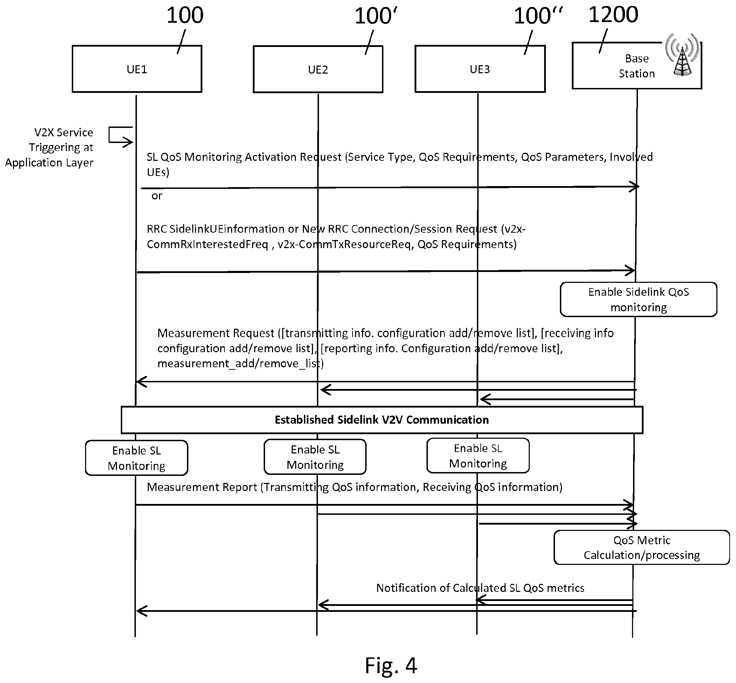

FIG. 4 describes a case in which a sidelink control device 1200 (e.g. a base station in a RAN) undertakes the interaction with sidelink devices 100, 100', 100" and calculation or collection of sidelink QoS metrics. The first step involves the signaling to set sidelink QoS requirements for a service to enable QoS monitoring (i.e. the measurement request 103) and/or signaling connection establishment configuration. This can e.g. be done in the context of session establishment or dedicated signaling. The sidelink control device 1200 enables sidelink QoS monitoring (see box "Enable Sidelink QoS monitoring") and configures the sidelink QoS monitoring and QoS related information reporting (e.g. each sidelink device 100, 100', 100" may have a different Tx and Rx configuration) via measurement request 103 messages. The optional content of such messages is going to be described below. The sidelink devices 100, 100', 100" send measurement reports with QoS related information 101, respectively information 104. The content depends on the type of QoS metric, service, or feedback type. The sidelink control device 1200 conducts QoS metric calculation/processing, based on the collected information. After this phase, the calculated QoS metrics could be reported to the sidelink devices 100, 100', 100" or can be used by sidelink control device 1200 nodes for sidelink QoS management, optimization or notifications.

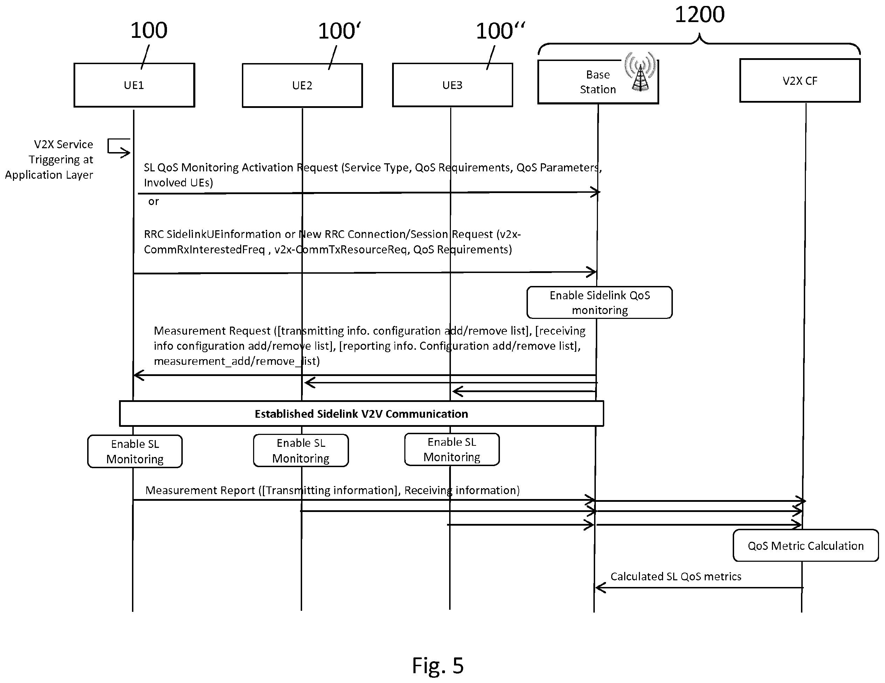

FIG. 5 describes the case that the configuration and/or calculation or collection of sidelink QoS metrics takes place at a V2X control function (CF). Any other 5G CN entity could be used instead of a V2X CF e.g. Session Management Function (SMF).

In particular, the sidelink control device 1200 can be implemented either by a BS (e.g. in a RAN or CN) alone, by a V2X CF alone, or by a combination of them. The sidelink control device 1200 can also be implemented by any other 5G entity or a combination of 5G entities.

In the following it is going to be described in detail, how a sidelink control device 1200 can configure monitoring and reporting of a sidelink device 100. This details in particular relate to a content of the measurement request 103 which is sent from the sidelink control device 1200 to the sidelink device 100.

The sidelink control device 1200 can configure the reporting policy of the sidelink device 100, based on a monitoring type (session based, area based, distance based) and a QoS metric (e.g., PRR, PIR, packet delay budget, bitrate, packer error rate).

The reporting information parameters that can be configured by the sidelink control device 1200 are at least one of the following:
For transmitting information:
   - V2X services considered (e.g. cooperative sensing, DENM)
   - QoS metrics and parameters
For receiving information:
   - Type of reporting (number of packets, timing, location)
For determining, whether the report aggregates packets received from all users, from a subset of them, or only from a specific user:
   - Ranges of distances considered (one or multiple)

To configure the reporting, e.g. a RRC reporting policy / configuration signaling can be used that is provided per sidelink device 100, with the following information elements:
For reporting information configuration:
   - Report config id (which can be an identifier of the configuration)
   - Reporting periodicity (which can be a value in ms or indexes)
   - Location area (which can be a zone or specific region where reporting is enabled)
   - List of configured measurements
      - Measurement id (which can be an id of this configured measurement)
      - Service or metrics ids (which can be types of services or reporting types considered. Value "all" is possible.)
      - V2X subchannels ids (which can be a sequence of subchannels considered. Value "all" is possible.)
      - Trx config id (which can identify the UE transmitting QoS info configuration used)
      - Rx config id (which can identifys the UE receiving QoS info configuration used)
      - service flow identifiers (which can identify a specific service flow e.g., service type and/or involved UEs)
      - link identifiers
      - connection identifiers
      - bearer identifiers
For configuration of the transmitting info of the sidelink device 100:
   - Trx config id (which can be an identifier of this configuration)
   - Sps assumption [true/false] (wherein true means that transmitting info is not reported if the number of packets transmitted is equal to the number of semi-persistent allocated resources)
   - Timing info config [all packets, none] (which can indicate if the generation time of each packet is included or not)
   - Location info config [all packets, groups of packets in close positions, none] (which can indicate if location info is included for all measurements, some measurements in close positions or for not at all)
   - Location delta (which means that, if "groups of packets in close positions" is selected above, location delta is the maximum distance between the packets grouped)
For configuration of receiving info of the sidelink device 100:
   - Rx config id (which can be an identifier of this configuration)
   - Transmitter ids (which can be a sequence of UEs IDS whose transmissions are considered. Value "all" is possible.)
   - Timing info config [all packets, none] (which can indicate if the generation time of each packet is included or not)
   - Edges for ranges of distances (which can be a sequence of increasing values. Value "inf" is used to denote infinite value. Some possible values are, e.g. none, [0, inf], [0, 80] or [0, 20, 40, 80, inf].)

The configuration of transmitting and/or receiving info can optionally include service flow identifier and/or link identifier and/or connection identifier and/or bearer identifier to specify where exactly a specific configuration described above could be applied.

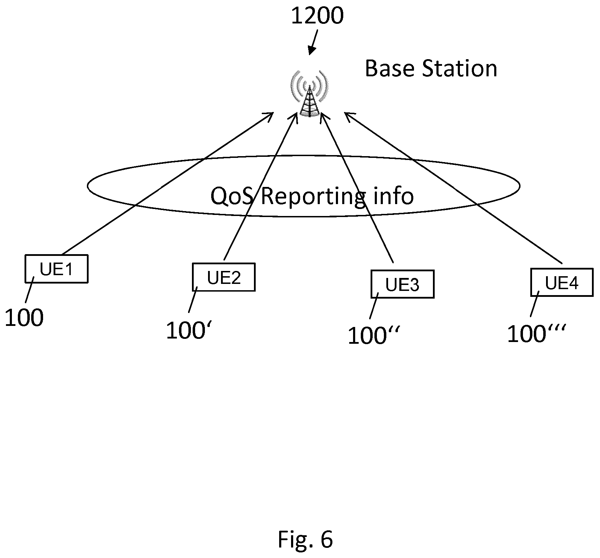

In view of FIG. 6, reporting of information from the sidelink device 100 to the sidelink control device 1200 is now going to be described.

After the configuration of reporting to the sidelink device 100 (i.e. by means of the measurement request 103 and/or a connection establishment configuration), the sidelink device 100 reports sidelink QoS information 101, information 104 or sidelink QoS metrics to the sidelink control device 1200. For example, vehicles (i.e. sidelink devices 100) are configured by the network (i.e. the sidelink control device) to monitor and report sidelink QoS metrics or sidelink QoS information to the network (e.g. a BS). As it is illustrated in Fig. 6, in a communication system, each sidelink device 100, 100', 100", 100‴ can report to the sidelink control device 1200.

Sidelink QoS metrics that are monitored and calculated at the sidelink device (e.g. PIR), or sidelink QoS information monitored at the sidelink device 100 to enable calculation of sidelink QoS metrics at the sidelink control device 1200 (e.g. PRR calculation, sidelink multicast session PER/delay, requires reporting from different session nodes) can be reported to the sidelink control device 1200.

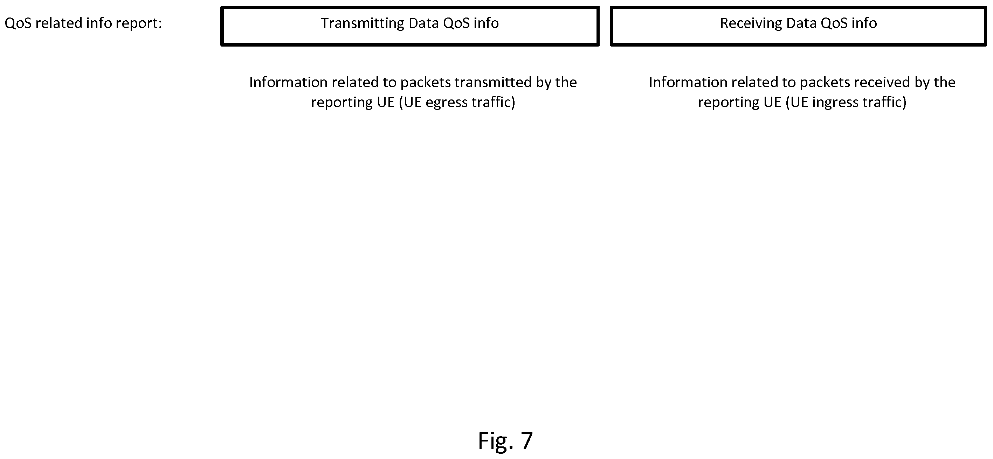

The sidelink QoS information report optionally can consist of two parts, as e.g. shown in FIG. 7:
a) QoS information of transmitting data (e.g. egress traffic) of a sidelink device
b) QoS information of receiving data (e.g. ingress traffic) of a sidelink device

The contents of both parts are configurable, depending on selected QoS metrics, a feedback type, or a service type.

Both parts a) and b) can e.g. be included in the sidelink QoS information 101, in the information 104, or in sidelink QoS metrics, that are transmitted from the sidelink device 100 to the sidelink control device 1200.

The contents of a transmitting data QoS information report can be configured to include at least one of following:
- QoS metrics/parameter
   - Parameter, e.g. a number of packets transmitted, egress bitrate
   - Measure type, e.g. actual value or average value
- Service type (e.g. session-based V2X service/maneuver, CAM, DENM)
- Timing information (e.g. list of generation times of packet transmitted)
- Location information, area of reporting (e.g. list of positions of packet transmitted)
- A list of positions, and for each item of the list the number of packets transmitted close to each position
- V2X subchannels (if report refers only to a subset of the V2X resource pools)
- Service flow identifier, link identifier, bearer identifier, connection identifier radio and/or channel information (e.g., CBR, received signal strength indicators, channel quality indicators, SL-RSRP, CSI etc).

The contents of receiving data QoS information report can be configured to include at least one of following:
- QoS metrics/parameter
   - Parameter, e.g. a number of packets received, ingress bit rate, PIR, latency
   - Measure type e.g. actual value or average value
- Service Type (e.g. session-based V2X service/maneuver, CAM, DENM)
- Timing information (e.g. list of generation times of packet received)
- Location information, area of reporting (e.g. list of positions of packet received, list of positions and monitored latency/PIR)
- Relevance distance / coverage range from Tx device
- V2X subchannels (if report refers only to a subset of the V2X resource pools)
- Service flow identifier, link identifier, bearer identifier, connection identifier
- radio and/or channel information (e.g., CBR, received signal strength indicators, channel quality indicators, SL-RSRP, CSI etc).

Further, radio and/or channel information of transmitting data and receiving data QoS information could be used to estimate and/or calculate the sidelink QoS metrics. This could take place either at the sidelink control device based on received radio and/channel information or at the sidelink device. Additional QoS information could be used for the estimation and/or calculation of sidelink QoS metrics.

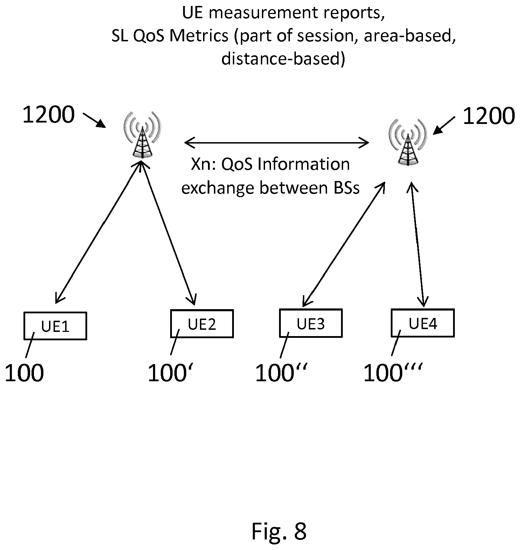

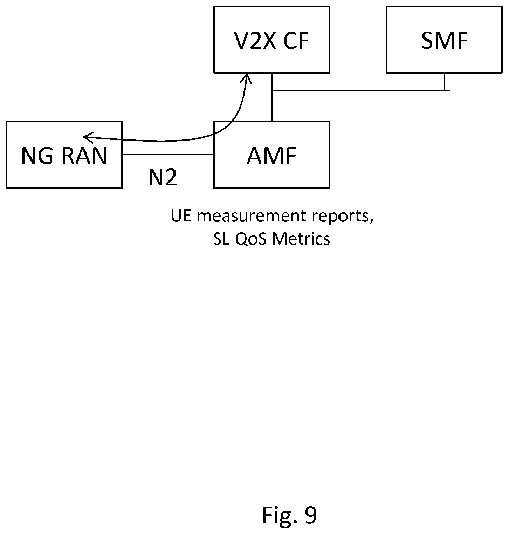

In view of FIG. 8 and FIG. 9 examples of inter-cell interaction for sidelink QoS metric calculation, and of core network calculation of sidelink QoS metric calculation are now going to be described.

In many cases, sidelink devices 100 that communicate via sidelink will be attached at different cells/BSs. In this case, for the calculation of sidelink QoS metrics the BSs (i.e. the sidelink control devices 1200) have, as depicted in FIG.8, to exchange measurement reports and/or sidelink QoS metrics of the sidelink devices 100, 100', 100", 100‴ via Xn signaling or any other inter cell interface or via a core network function. The final QoS metric derivation from QoS related information reporting can be done by a BS (i.e. by the sidelink control device 1200).

According to another implementation, one or more UE IDs and/or one or more service flow identifiers and/or one or more link identifiers and/or one or more bearer identifiers and/or one or more connection identifiers could be used for the exchange of information between the cells/BSs.

Additionally, or alternatively, as it is shown in FIG. 9. a core network function can be involved that will collect measurement reports and/or sidelink QoS metrics from the sidelink devices 100 via control plane CN interfaces. A core entity undertakes the calculation of sidelink broadcast / sidelink QoS metrics (e.g. an AMF, V2X Control function), using the inputs that come from different BSs. The calculation results can be notified to these BSs.

According to another implementation, one or more UE IDs and/or one or more service flow identifiers and/or one or more link identifiers and/or one or more bearer identifiers and/or one or more connection identifiers could be used for the exchange of information between a core entity and the BSs.

In the following, a table of sidelink QoS metrics and information needed by a sidelink device 100 or by a sidelink control device 1200 to calculate each sidelink QoS metric, is presented. That is, each sidelink QoS metric shown in the table (in the leftmost column) can be included in the sidelink QoS metric that is calculated by the sidelink device 100 or by the sidelink control device 1200.

Further, the information which is required to calculate the sidelink QoS metric (indicated in the three rightmost columns of the table) can be obtained by the sidelink device 100 based on sidelink communication, e.g. by monitoring said sidelink communication (also, this information can also be directly obtained in the sidelink control device 1200). The obtained information can then be used in the sidelink device 100 to calculate the sidelink QoS metric or can be included in the sidelink QoS information 101 or in the information 104, where it is transmitted to the sidelink control device 1200 for calculation of the sidelink QoS metric in the sidelink control device 1200.

| **Sidelink QoS Metric** | **Example information needed by a sidelink device 100 or a sidelink control device 1200 for calculation of sidelink QoS metric** | | |
|---|---|---|---|
| | **Broadcast** | **Unicast (Session)** | **Multicast (Session)** |
| **Sidelink Packet Delay Budget (PDB)** | Sidelink control device 1200 calculates, based on report of sidelink device 100: | Sidelink control device 1200 calculates, based on report of sidelink device 100: | Sidelink control device 1200 calculates, based on report of sidelink device 100: |
| | | - Timestamp of packet transmitted by Tx UE1 | |
| | - Timestamp of packet transmitted by Tx UE1 | | - Timestamp of packet transmitted by Tx UE1 |
| | | - Timestamp of packet received by Rx UE2 | |
| | - Timestamp of packet received by UEs within range of (0.D]. | | - Timestamp of packet received by Rx UEs that are member of the group |
| **Average Sidelink bit-rate** | Sidelink device 100 calculates metric and can report to sidelink control device 1200: | Sidelink device 100 calculates metric and can report to Sidelink control device 1200: | Sidelink device 100 calculates metric and can report to sidelink control device 1200: |
| | - accumulating the number of bits entering the Rx UE (PDCP SDU layer), and then dividing the sum by the measurement period | - accumulating the number of bits entering the Rx UE (PDCP SDU layer), and then dividing the sum by the measurement period | - accumulating the number of bits entering the Rx UE from UEs that are members of the group (PDCP SDU layer), and then dividing the sum by the measurement period |
| **Packet Reception Ration: PRR** | Sidelink control device 1200 calculates, based on report of sidelink device 100: | Sidelink control device 1200 calculates, based on report of sidelink device 100: | Sidelink control device 1200 calculates, based on report of sidelink device 100: |
| | | - Number of packers Transmitted by UE1; | |
| | - Number of packers Transmitted by UE1; | | - Number of packers Transmitted by UE1; |
| | | - Number of packets successfully received (within delay req.) by UE2 | |
| | - Number of packets successfully received (within delay req.) by UEs within the range of (0,D]. | | - Number of packets successfully received (within delay req.) by UEs that are members of the group |
| **Packet Error Rate (PER = 1 - PRR)** | Same as above | Same as above | Same as above |
| **Packet Inter-Reception: PIR (Average or CFD)** | Sidelink device 100 calculates metric and can report to Sidelink control device 1200: | Sidelink device 100 calculates metric and can report to Sidelink control device 1200: | Sidelink device 100 calculates metric and can report to Sidelink control device 1200: |
| | - time Ti elapsed between two successive successful receptions of two different packets transmitted from node A to node B for the same application, if the distances at the two packets' receiving time between node A and node B is within the range of (0.D]. | - time Ti elapsed between two successive successful receptions of two different packets transmitted from node A to node B for the same application. | - the time Ti elapsed between two successive successful receptions of two different packets transmitted from node A to node B, if the node B is one of the intended set of receivers of the node A. |

According to an example of the present disclosure, in the following section, calculation of PRR (based on the sidelink control device 1200) for 5G Sidelink broadcast/multicast QoS is going to be described. This section introduces Packet Reception Ratio (PRR) as a 5G sidelink QoS metric to monitor sidelink broadcast/multicast communication. It also provides methods that allow the network (i.e. the sidelink control device 1200) to calculate and maintain QoS metrics for multicast and broadcast sidelink communication among vehicles, located either at the RAN or at the Core Network.

Different options for PRR calculation can be used depending on the type of service and transmission mode:
- Option 1: Average PRR for ranges of distances (broadcast).
- Option 2: Average PRR for a relevance area (broadcast).
- Option 3: Per UE PRR for a relevance area (broadcast).
- Option 4: Average PER in a multicast group.
- Option 5: Per UE PER in a multicast group.

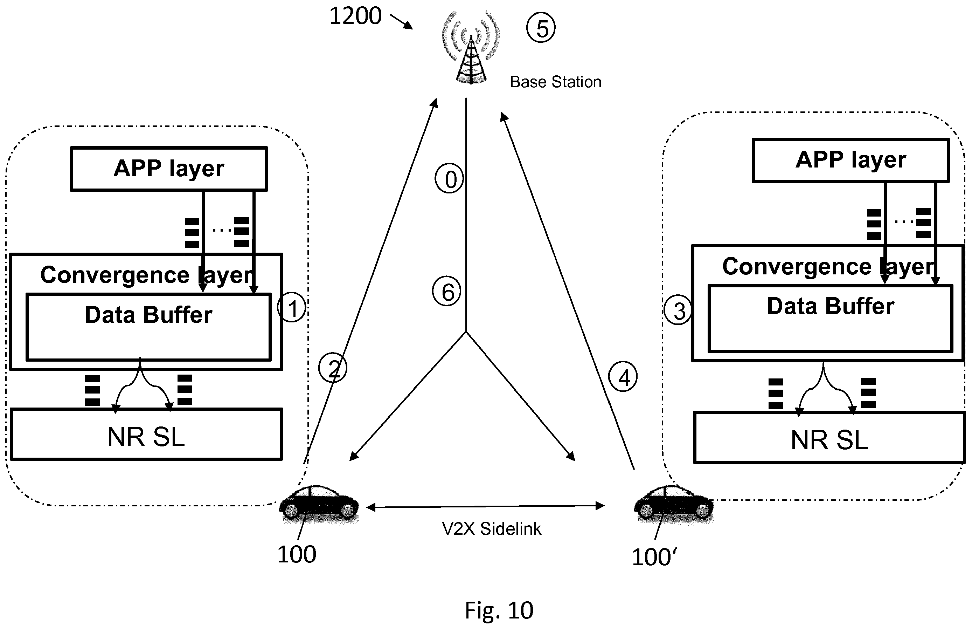

Each PRR option implies a different UE reporting configuration, and also a different calculation at the RAN is needed. An overview of the calculation procedure is e.g. shown in FIG. 10. As illustrated in FIG. 10, the following general steps are considered:
0) Configuration of UEs' reporting to enable sidelink broadcast/multicast QoS monitoring.
1) Add to transmitted packets information about e.g. location of transmitting device and/or ID.
2) Reporting of info related to packets transmitted by the UE.
3) Check received packets and retrieve information about e.g. transmitting device and distance of transmission.
4) Reporting of info related to packets received by the UE.
5) Network Calculation of experienced QoS of sidelink V2V multicast/broadcast communications, according to PRR scheme selected.
6) Notification of calculated QoS (e.g. PRR) values to UEs for communication system optimization, application layer adaptations.

In an example of the present disclosure, it is now described how the receiving data information can be obtained via communication layer extensions: an optional method is determining how to monitor the information related to the received data packets by the reporting UE (i.e. by the sidelink device 100). In this sense the receiving data information can be obtained by each UE via:
- Application layer API: introduced at the UE convergence layer (between application layer and communication layer) to collect information at the receiver side for packets successfully transmitted. This option means that the APP layer of the receiver, after processing the received packets, may inform the communication layers through an API (e.g. convergence layer) about the number of application layer packets successfully (correctly and in due time) received indicating the distance from the transmitter of these packets. Alternatively, a service flow identifier (e.g., PFI in NR PC5, 3GPP Rel. 16) could be used to retrieve QoS information of an associated service flow at the application layer and/or the V2X layer of the receiver. The same also applies at the transmitter side.
- Communication layer header extensions: Other optional communication layer protocol head extensions are explained, for data packets exchanged via sidelink to allow the receiver side to collect information for the relevance area of packets successfully received. This option involves extending the headers of communication layer (user plane PC5 messages) so as to include location info of a transmitting device and/or ID (for instance, the service data adaptation protocol (SDAP) header). Besides, the same operations proposed for APP layer can be performed using communication layers.

Moreover, a service flow identifier (e.g., PFI in NR PC5, 3GPP Rel. 16) and/or a link identifier and/or a bearer identifier could be used to retrieve QoS information from the application layer and/or the V2X layer of the receiver and/or the transmitter side. Also a service flow identifier (e.g., PFI in NR, 3GPP PC5 Rel. 16) and/or a link identifier and/or a bearer identifier could be used to retrieve QoS information from the communication layer of the receiver and/or the transmitter side.

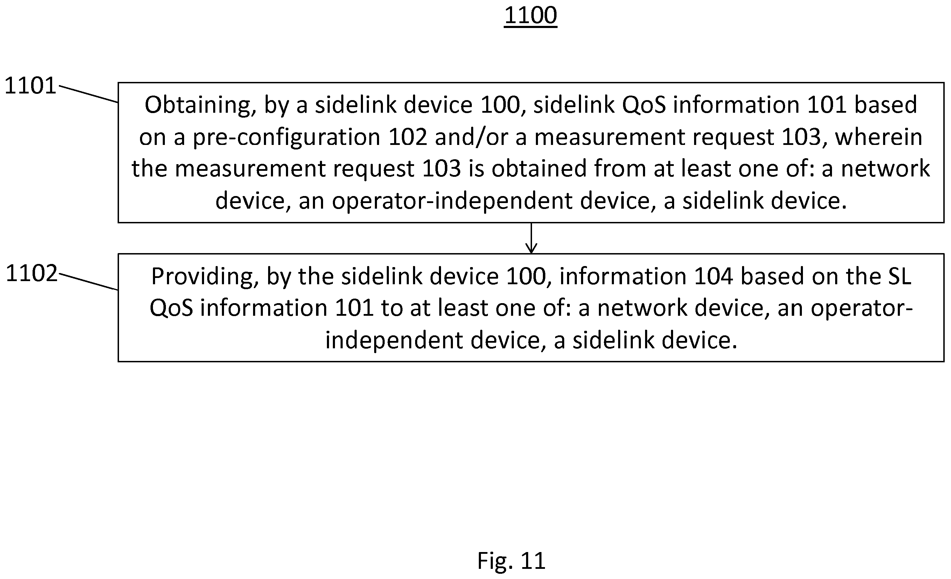

FIG. 11 shows a schematic view of a method 1100 according to an example of the present disclosure. The method 1100 is for providing sidelink QoS information 101 and comprises the following steps:
The method 1100 comprises a first step of obtaining 1101, by a sidelink device 100, the sidelink QoS information 101 based on a pre-configuration 102 and/or a measurement request 103 and/or a connection establishment configuration, wherein the measurement request 103 and/or a connection establishment configuration is obtained from at least one of: a network device, an operator-independent device, a sidelink device.

The method 1100 comprises a second step of providing 1102, by the sidelink device 100, information 104 based on the sidelink QoS information 101 to at least one of: a network device, an operator-independent device, a sidelink device.

FIG. 12 shows a schematic view of a sidelink control device 1200 according to an example of the present disclosure.

The sidelink control device 1200 is for providing a sidelink QoS metric 1201 and is configured to obtain a measurement request 1202 (to this end, it optionally includes all of the above described functionality regard a sidelink control device 1200). The sidelink control device 1200 is also configured to transmit the measurement request 1202 and/or a connection establishment configuration. The sidelink control device 1200 is further configured to receive sidelink QoS information 1203 based on the measurement request 1202 and/or a connection establishment configuration. Finally, the sidelink control device 1200 is configured to obtain the sidelink QoS metric 1201 based on the received sidelink QoS information 1203.

The measurement request 1202 that is transmitted by the sidelink control device 1200 is in particular the measurement request 103 that is obtained by the sidelink device 100.

The measurement request 1202 can be related to a specific service (e.g. a V2X service), that is operated by the sidelink device 100 and/ or the sidelink control device 1200.

The sidelink QoS information 1203 that is receive by the sidelink control device is the sidelink QoS information 101 or the information 104 that is transmitted by the sidelink device.

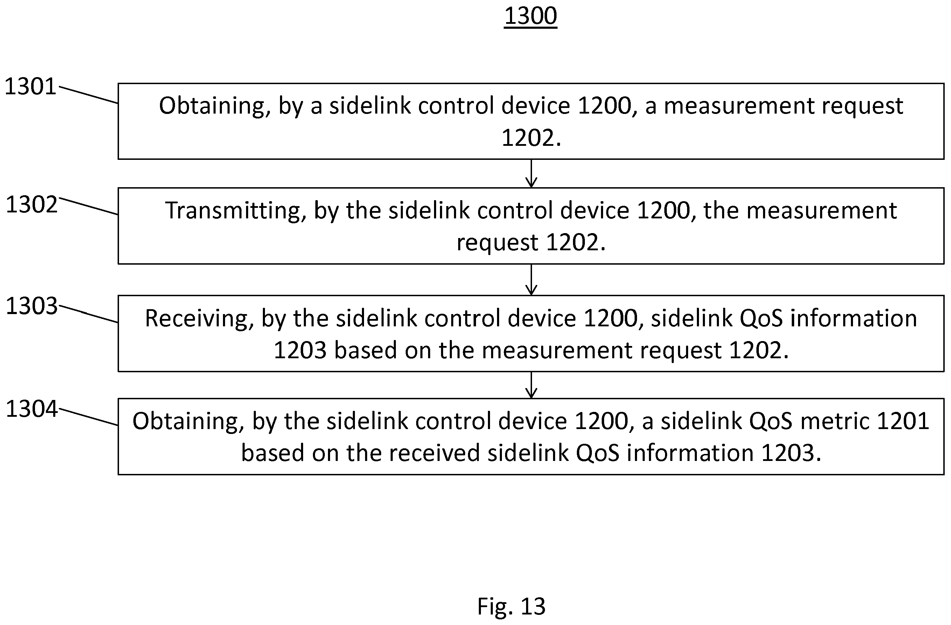

FIG. 13 shows a schematic view of a method 1300 according to an example of the present disclosure. The method 1300 is for providing a sidelink QoS, metric 1201.

The method 1300 comprises the following steps: A first step of the method 1300 is obtaining 1301, by the sidelink control device 1200, a measurement request 1202. The method 1300 also comprises a step of transmitting 1302, by the sidelink control device 1200, the measurement request 1202. The method 1300 further comprises a step of receiving 1303, by the sidelink control device 1200, sidelink QoS information 1203 based on the measurement request 1202. The method 1300 comprises a last step of obtaining 1304, by the sidelink control device 1200, the sidelink QoS metric 1201 based on the received sidelink QoS information 1203.

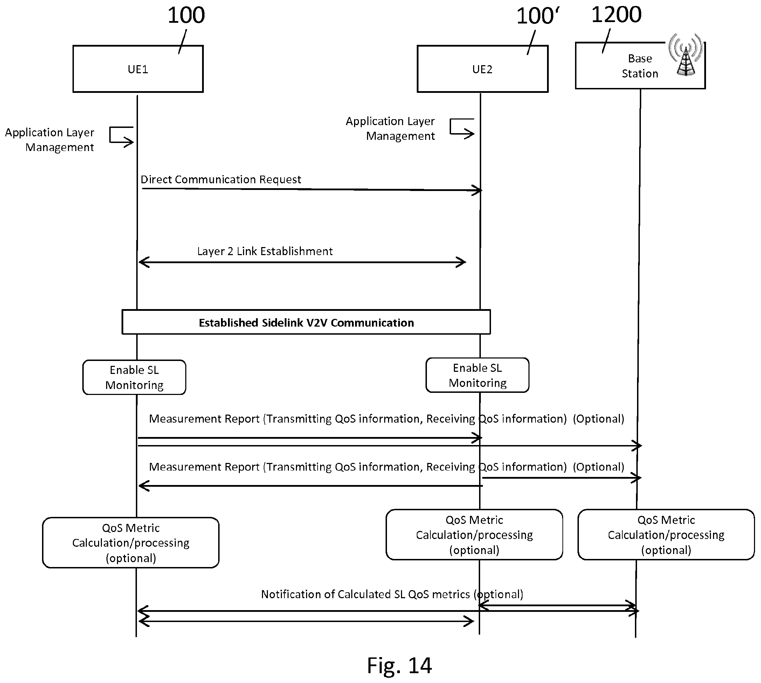

FIG. 14 shows an example in which the calculation or collection of sidelink QoS metrics is based on the sidelink connection establishment configuration between the sidelink devices 100, 100'.

The application layer (e.g., V2X application layer) of sidelink device 100, after the triggering of an application service, may provide application requirements for the sidelink communication (e.g., PC5 QoS parameters and PFI) to the access stratum of the sidelink device 100. Then the sidelink device 100 triggers the Layer-2 link establishment procedure with sidelink device 100'. FIG. 14 shows a unicast link establishment example. This also applies to multicast and/or broadcast link establishments. During the link establishment procedure between the two sidelink devices 100, 100', sidelink configuration parameters are exchanged between the sidelink control devices (100, 100').

Using the connection establishment configuration, the sidelink devices 100 and 100', can enable sidelink monitoring and configure measurement, monitoring and reporting of the sidelink communication between sidelink devices 100 and 100'. Sidelink QoS metrics that are monitored and calculated at the sidelink device, or sidelink QoS information monitored at the sidelink device 100 to enable calculation of sidelink QoS metrics (e.g. PRR, packet error rate, delay etc) can be reported to another sidelink device 100' and/or the sidelink control device 1200. As it is illustrated in Fig. 14, each sidelink device (e.g., 100) can report sidelink QoS information 101, information 104 or sidelink QoS metrics to the other sidelink device (e.g., 100') and/or the sidelink control device 1200. Also the sidelink control device 1200 can provide sidelink QoS metrics that are collected and/or processed and/or calculated to the sidelink control devices (100, 100').

According to an example of the present disclosure, for unicast, groupcast and broadcast sidelink (e.g., PC5) communication, the per-flow QoS model for sidelink QoS management could be applied. A sidelink QoS Flow is associated with a sidelink QoS rule that contains the sidelink QoS parameters (e.g., PQI, optionally range). Each sidelink QoS Flow has a PC5 QoS Flow Identifier (PFI). User Plane traffic with the same PFI receives the same traffic forwarding treatment (e.g. scheduling, admission threshold). In the case that different data packets may require different QoS treatments, the data packets shall be sent from the application layer (e.g., V2X layer) to the Access Stratum (AS) layer within PC5 QoS Flows identified by different PFIs.

A sidelink service can be established via PC5-S and/or RRC signaling and sidelink QoS slows are established. This means that activation of sidelink QoS monitoring could be realized upon or after the sidelink connection establishment (e.g., sidelink unicast link) and/or using information exchanged in the context of sidelink connection establishment and/or connection update. In this case service flow identifiers (e.g., PFIs) and/or link identifiers and/or bearer identifiers, or other flows identifiers may be used to configure sidelink QoS monitoring, and/or to obtain sidelink QoS metrics, QoS information, and/or to report sidelink QoS metrics and QoS information at sidelink control device and/or to a sidelink device.

More specifically, different configuration options could be considered. Through PC5-S exchanges for the establishment phase, both sides at PC5-S layer (i.e., UEs, sidelink devices) are aware of the PC5 QoS parameters and the PFIs of both sides. Thereinafter, with the establishment of the Sidelink Radio Bearers (SLRB), the Access Stratum (AS) of each sidelink device can map the SLRB ID with the corresponding QoS parameters and the PC5 QoS Flow (e.g., service flow identifiers, PFI), using RRC signaling. At the receiver side, data received over the established unicast link and the sidelink device can monitor the required QoS, by using the mapping between the SLRB ID and the service flows. The sidelink device that receives a packet, knows the SLRB ID that the packet traverses and the mapped PC5 QoS Flow (i.e., service flow identifier) as well as the corresponding QoS requirements at the AS. Based on the PC5-S and the PC5 RRC signalling the mapping between SLRB ID and QoS info (PFI, QoS requirements/parameters) is feasible. Hence, the receiving sidelink devices for each received data packet can check if the QoS requirements of the corresponding packet (at the specific SLRB ID) are met or not.

Alternatively, service flow identifiers (e.g., PFIs) and/or link identifiers, and/or bearer identifiers could be included in user plane data packets (e.g., added at the V2X layer headers, SDAP headers or any other header) of the transmitting sidelink device (e.g., UE). These identifiers can be used by the receiving device (e.g., UE) to check if the QoS requirements of the corresponding received data packet are met or not.

Information and configurations from the connection establishment (or update) could be used together with other configuration information that are pre-configured and/or obtained via a measurement request.

The sidelink connection establishment (e.g., or unicast link establishment) can take place using signaling either between two or more sidelink devices and/or with the support of a network entity (e.g., BS, core network entity, application server, cloud server etc).

In a further example of the present disclosure, the network can configure the mapping of a PC5 QoS flow to SLRB. For the QoS flow which needs to be monitored, the network can configure this QoS flow to a DRB which only corresponds to this QoS flow, i.e. 1:1 mapping is used between the QoS flow which needs to be monitored and DRB, in this way, UE is easy to count the QoS metrics, i.e. data rate, delay and packet error rate.

## Claims

1. A sidelink device (100) configured to:
obtain sidelink Quality of Service, SL QoS, information (101) based on: a pre-configuration (102) pre-stored in the sidelink device (100) and at least one of a measurement request (103) and a connection establishment configuration, wherein the measurement request (103) or the connection establishment configuration is obtained from a sidelink control device (1200), the sidelink control device (1200) being one of:
- a network device;
- an operator-independent device; and
- a further sidelink device, and
the sidelink device (100) is further configured to provide information (104) based on the SL QoS information (101) to the sidelink control device (1200),
**characterised in that**:
the measurement request (103) or connection establishment configuration relates to a service that is operated by the sidelink device (100),
wherein the at least one of: the pre-configuration (102), the measurement request (103) or the connection establishment configuration includes at least one of:
- one or more service flow identifiers associated to respective one or more service flows;
- one or more link identifiers associated to respective one or more links; and
- one or more bearer identifiers associated to respective one or more bearers,
wherein the sidelink device (100) is configured to obtain the SL QoS information (101) based on the one or more service flow identifiers, one or more link identifiers or one or more bearer identifiers, and
wherein the one or more bearer identifiers are associated to the one or more service flow identifiers, the one or more bearer identifiers identifying bearers of the sidelink device or bearers of a receiving device, and the one or more service flow identifiers identifying service flows of the sidelink device or of a receiving device.

2. The sidelink device (100) according to claim 1, wherein the sidelink device (100) provides the sidelink QoS information (101) to the sidelink control device (1200) for determining sidelink QoS metrics from the sidelink QoS information (101).

3. The sidelink device (100) according to claim 1 or 2, wherein the SL QoS information (101) is obtained based on multicast, unicast, and/or broadcast SL communication that is transmitted, received, and/or observed at the sidelink device (100).

4. The sidelink device (100) according to claim 1, further configured to obtain, based on the SL QoS information (101) a SL QoS metric, and further configured to transmit the SL QoS metric to the sidelink control device (1200), wherein the sidelink device (100) is configured to directly determine sidelink QoS metrics according to the measurement request (103) that is received from the sidelink control device (1200) and/or based on the pre-configuration (102) of the sidelink device (100) and/or on the connection establishment configuration.

5. The sidelink device (100) according to any of the preceding claims, wherein the at least one of: the pre-configuration (102), the measurement request (103) or connection establishment configuration includes one or more identifier, ID, of one or more sidelink devices, and wherein the sidelink device (100) is configured to obtain the SL QoS information (101) based on the ID.

6. The sidelink device (100) according to any of the preceding claims, further comprising that at least one of: the pre-configuration (102); the measurement request (103); and the connection establishment configuration, includes information regarding a geographic location and/or a geographic distance, and wherein the sidelink device (100) is further configured to obtain the SL QoS information (101) based on the geographic location and/or the geographic distance.

7. The sidelink device (100) according to the preceding claim, wherein the pre-configuration (102), the measurement request (103) or the connection establishment configuration includes information regarding the geographic distance, and wherein the geographic distance is a distance between the sidelink device (100) and another sidelink device which is considered for obtaining the SL QoS information.

8. A sidelink control device (1200) configured to:
- transmit a measurement request (1202) and/or a connection establishment configuration to a sidelink device (100), wherein the measurement request (103) or the connection establishment configuration relates to a service that is operated by the sidelink device (100),
- obtain sidelink Quality of Service, SL QoS, information (1203) from the sidelink device (100), the SL QoS information (1203) being based on a pre-configuration (102) pre-stored in the sidelink device (100) and at least one of the measurement request (1202) and the connection establishment configuration, and
- obtain an SL QoS metric (1201) based on the received SL QoS information (1203),
**characterised in that**:
the at least one of: the pre-configuration (102), the measurement request (103) or the connection establishment configuration includes at least one of:
- one or more service flow identifiers associated to respective one or more service flows;
- one or more link identifiers associated to respective one or more links; and
- one or more bearer identifiers associated to respective one or more bearers,
wherein the sidelink device (100) is configured to obtain the SL QoS information (101) based on the one or more service flow identifiers, one or more link identifiers or one or more bearer identifiers, and
wherein the one or more bearer identifiers are associated to the one or more service flow identifiers, the one or more bearer identifiers identifying bearers of the sidelink device or bearers of a receiving device, and the one or more service flow identifiers identifying service flows of the sidelink device or of a receiving device.

9. The sidelink control device (1200) according to claim 8, wherein the measurement request (1202) and/or the connection establishment configuration relates to a service that is operated by a sidelink device (100).

10. The sidelink control device (1200) according to claim 8 or 9, configured to include a request for the SL QoS metric (1201) in the measurement request (1202) and/or the connection establishment configuration.

11. The sidelink control device (1200) according to any one of claims 8 to 10, wherein the measurement request (1202) and/or the connection establishment configuration includes one or more identifier, ID, of sidelink devices, wherein the sidelink devices relate to a certain SL session.

12. The sidelink control device (1200) according to any one of claims 8 to 11, further comprising that at least one of: the pre-configuration (102); the measurement request (103); and the connection establishment configuration, includes information regarding a geographic location and/or a geographic distance, and wherein the sidelink device (100) is further configured to obtain the SL QoS information (101) based on the geographic location and/or the geographic distance.

13. The sidelink control device (1200) according to claim 12, wherein the measurement request (1202) or the connection establishment configuration includes the information regarding the geographic location and/or the geographic distance.

14. The sidelink control device (1200) according to any one of claims 9 to 13, configured to obtain information based on SL QoS information (1203), and to provide SL QoS metric and/or SL QoS information, based on the obtained information, to another sidelink device and/or another sidelink control device.

15. A computer program with a program code for:
obtaining, by a sidelink device (100), sidelink Quality of Service, SL QoS, information (101) based on: a pre-configuration (102) pre-stored in the sidelink device (100) and at least one of: a measurement request (103) and a connection establishment configuration, wherein the measurement request (103) or the connection establishment configuration is obtained from a sidelink control device (1200), the sidelink control device (1200) being one of:
- a network device;
- an operator-independent device;
- a further sidelink device, and
providing, by the sidelink device (100), information (104) based on the SL QoS information (101) to the sidelink control device (1200),
wherein the measurement request (103) or connection establishment configuration relates to a service that is operated by the sidelink device (100),
**characterised in that**:
the at least one of: the pre-configuration (102), the measurement request (103) or the connection establishment configuration includes at least one of:
- one or more service flow identifiers associated to respective one or more service flows;
- one or more link identifiers associated to respective one or more links; and
- one or more bearer identifiers associated to respective one or more bearers,
wherein the sidelink device (100) is configured to obtain the SL QoS information (101) based on the one or more service flow identifiers, one or more link identifiers or one or more bearer identifiers, and
wherein the one or more bearer identifiers are associated to the one or more service flow identifiers, the one or more bearer identifiers identifying bearers of the sidelink device or bearers of a receiving device, and the one or more service flow identifiers identifying service flows of the sidelink device or of a receiving device.

## Patentansprüche

1. Sidelink-Vorrichtung (100), die konfiguriert ist zum:
Erhalten von Sidelink-Dienstgüte(SL-QoS)-Informationen (101) basierend auf: einer Vorkonfiguration (102), die in der Sidelink-Vorrichtung (100) vorgespeichert ist, und mindestens einer von einer Messanforderung (103) und einer
Verbindungsherstellungskonfiguration, wobei die Messanforderung (103) oder die Verbindungsherstellungskonfiguration von einer Sidelink-Steuervorrichtung (1200) erhalten wird, wobei die Sidelink-Steuervorrichtung (1200) eines der folgenden ist:
- eine Netzwerkvorrichtung;
- eine bedienerunabhängige Vorrichtung; und
- eine weitere Sidelink-Vorrichtung und
wobei die Sidelink-Vorrichtung (100) ferner konfiguriert ist, um Informationen (104) basierend auf den SL-QoS-Informationen (101) an die Sidelink-Steuervorrichtung (1200) bereitzustellen,
**dadurch gekennzeichnet, dass:**
sich die Messanforderung (103) oder die Verbindungsherstellungskonfiguration auf einen Dienst, der durch die Sidelink-Vorrichtung (100) betrieben wird, bezieht,
wobei die mindestens eine von: der Vorkonfiguration (102), der Messanforderung (103) oder der Verbindungsherstellungskonfiguration mindestens eines einschließt von:
- einem oder mehreren Dienstflussbezeichnern, die mit einem oder mehreren jeweiligen Dienstflüssen verknüpft sind;
- einem oder mehreren Linkbezeichnern, die mit einem oder mehreren jeweiligen Links verknüpft sind; und
- einem oder mehreren Trägerbezeichnern, die mit einem oder mehreren jeweiligen Trägern verknüpft sind,
wobei die Sidelink-Vorrichtung (100) konfiguriert ist, um die SL-QoS-Informationen (101) basierend auf dem einen oder den mehreren Dienstflussbezeichnern, dem einen oder den mehreren Linkbezeichnern oder dem einen oder den mehreren Trägerbezeichnern zu erhalten und
wobei der eine oder die mehreren Trägerbezeichner mit dem einen oder den mehreren Dienstflussbezeichnern verknüpft sind, wobei der eine oder die mehreren Trägerbezeichner Träger der Sidelink-Vorrichtung oder Träger einer Empfangsvorrichtung identifizieren und der eine oder die mehreren Dienstflussbezeichner Dienstflüsse der Sidelink-Vorrichtung oder einer Empfangsvorrichtung identifizieren.

2. Sidelink-Vorrichtung (100) nach Anspruch 1, wobei die Sidelink-Vorrichtung (100) die Sidelink-QoS-Informationen (101) an die Sidelink-Steuervorrichtung (1200) zum Bestimmen von Sidelink-QoS-Metriken aus den Sidelink-QoS-Informationen (101) bereitstellt.

3. Sidelink-Vorrichtung (100) nach Anspruch 1 oder 2, wobei die SL-QoS-Informationen (101) basierend auf Multicast-, Unicast- und/oder Broadcast-SL-Kommunikation, die an die Sidelink-Vorrichtung (100) übertragen, an dieser empfangen und/oder beobachtet wird, erhalten werden.

4. Sidelink-Vorrichtung (100) nach Anspruch 1, die ferner konfiguriert ist, um basierend auf den SL-QoS-Informationen (101) eine SL-QoS-Metrik zu erhalten und ferner konfiguriert ist, um die SL-QoS-Metrik an die Sidelink-Steuervorrichtung (1200) zu übertragen, wobei die Sidelink-Vorrichtung (100) konfiguriert ist, um die Sidelink-QoS-Metriken gemäß der Messanforderung (103), die von der Sidelink-Steuervorrichtung (1200) empfangen wird, und/oder basierend auf der Vorkonfiguration (102) der Sidelink-Vorrichtung (100) und/oder auf der Verbindungsherstellungskonfiguration direkt zu bestimmen.

5. Sidelink-Vorrichtung (100) nach einem der vorstehenden Ansprüche, wobei die mindestens eine von: der Vorkonfiguration (102), der Messanforderung (103) oder der Verbindungsherstellungskonfiguration einen oder mehrere Bezeichner (ID) von einer oder mehreren Sidelink-Vorrichtungen einschließt und wobei die Sidelink-Vorrichtung (100) konfiguriert ist, um die SL-QoS-Informationen (101) basierend auf dem **ID zu** erhalten.

6. Sidelink-Vorrichtung (100) nach einem der vorstehenden Ansprüche, die ferner umfasst, dass mindestens eine von: der Vorkonfiguration (102); der Messanforderung (103); und der Verbindungsherstellungskonfiguration Informationen bezüglich eines geografischen Standorts und/oder einer geografischen Entfernung einschließt, und wobei die Sidelink-Vorrichtung (100) ferner konfiguriert ist, um die SL-QoS-Informationen (101) basierend auf dem geografischen Standort und/oder der geografischen Entfernung zu erhalten.

7. Sidelink-Vorrichtung (100) nach dem vorstehenden Anspruch, wobei die Vorkonfiguration (102), die Messanforderung (103) oder die Verbindungsherstellungskonfiguration Informationen bezüglich der geografischen Entfernung einschließt, und wobei die geografische Entfernung eine Entfernung zwischen der Sidelink-Vorrichtung (100) und einer anderen Sidelink-Vorrichtung, die für das Erhalten der SL-QoS-Informationen berücksichtigt wird, ist.

8. Sidelink-Steuervorrichtung (1200), die konfiguriert ist zum:
- Übertragen einer Messanforderung (1202) und/oder einer Verbindungsherstellungskonfiguration an eine Sidelink-Vorrichtung (100), wobei sich die Messanforderung (103) oder die Verbindungsherstellungskonfiguration auf einen Dienst, der durch die Sidelink-Vorrichtung (100) betrieben wird, bezieht,
- Erhalten von Sidelink-Dienstgüte(SL-QoS)-Informationen (1203) von der Sidelink-Vorrichtung (100), wobei die SL-QoS-Informationen (1203) auf einer Vorkonfiguration (102), die in der Sidelink-Vorrichtung (100) vorgespeichert ist, und mindestens einer von der Messanforderung (1202) und der Verbindungsherstellungskonfiguration basieren und
- Erhalten einer SL-QoS-Metrik (1201) basierend auf den empfangenen SL-QoS-Informationen (1203),
**dadurch gekennzeichnet, dass:**
die mindestens eine von: der Vorkonfiguration (102), der Messanforderung (103) oder der Verbindungsherstellungskonfiguration mindestens eines einschließt von:
- einem oder mehreren Dienstflussbezeichnern, die mit einem oder mehreren jeweiligen Dienstflüssen verknüpft sind;
- einem oder mehreren Linkbezeichnern, die mit einem oder mehreren jeweiligen Links verknüpft sind; und
- einem oder mehreren Trägerbezeichnern, die mit einem oder mehreren jeweiligen Trägern verknüpft sind,
wobei die Sidelink-Vorrichtung (100) konfiguriert ist, um die SL-QoS-Informationen (101) basierend auf dem einen oder den mehreren Dienstflussbezeichnern, dem einen oder den mehreren Linkbezeichnern oder dem einen oder den mehreren Trägerbezeichnern zu erhalten und
wobei der eine oder die mehreren Trägerbezeichner mit dem einen oder den mehreren Dienstflussbezeichnern verknüpft sind, wobei der eine oder die mehreren Trägerbezeichner Träger der Sidelink-Vorrichtung oder Träger einer Empfangsvorrichtung identifizieren und der eine oder die mehreren Dienstflussbezeichner Dienstflüsse der Sidelink-Vorrichtung oder einer Empfangsvorrichtung identifizieren.

9. Sidelink-Steuervorrichtung (1200) nach Anspruch 8, wobei sich die Messanforderung (1202) und/oder die Verbindungsherstellungskonfiguration auf einen Dienst, der durch eine Sidelink-Vorrichtung (100) betrieben wird, bezieht.

10. Sidelink-Steuervorrichtung (1200) nach Anspruch 8 oder 9, die konfiguriert ist, um eine Anforderung für die SL-QoS-Metrik (1201) in die Messanforderung (1202) und/oder die Verbindungsherstellungskonfiguration einzuschließen.

11. Sidelink-Steuervorrichtung (1200) nach einem der Ansprüche 8 bis 10, wobei die Messanforderung (1202) und/oder die Verbindungsherstellungskonfiguration einen oder mehrere Bezeichner (ID) von Sidelink-Vorrichtungen einschließt, wobei sich die Sidelink-Vorrichtungen auf eine gewisse SL-Sitzung beziehen.

12. Sidelink-Steuervorrichtung (1200) nach einem der Ansprüche 8 bis 11, die ferner umfasst, dass mindestens eine von: der Vorkonfiguration (102); der Messanforderung (103); und der Verbindungsherstellungskonfiguration Informationen bezüglich eines geografischen Standorts und/oder einer geografischen Entfernung einschließt, und wobei die Sidelink-Vorrichtung (100) ferner konfiguriert ist, um die SL-QoS-Informationen (101) basierend auf dem geografischen Standort und/oder der geografischen Entfernung zu erhalten.

13. Sidelink-Steuervorrichtung (1200) nach Anspruch 12, wobei die Messanforderung (1202) oder die Verbindungsherstellungskonfiguration die Informationen bezüglich des geografischen Standorts und/oder der geografischen Entfernung einschließt.

14. Sidelink-Steuervorrichtung (1200) nach einem der Ansprüche 9 bis 13, die konfiguriert ist, um Informationen basierend auf SL-QoS-Informationen (1203) zu erhalten und um eine SL-QoS-Metrik und/oder SL-QoS-Informationen, basierend auf den erhaltenen Informationen, an eine andere Sidelink-Vorrichtung und/oder eine andere Sidelink-Steuervorrichtung bereitzustellen.

15. Computerprogramm mit einem Programmcode zum:
Erhalten, durch eine Sidelink-Vorrichtung (100), von Sidelink-Dienstgüte(SL-QoS)-Informationen (101) basierend auf: einer Vorkonfiguration (102), die in der Sidelink-Vorrichtung (100) vorgespeichert ist, und mindestens einer von: einer Messanforderung (103) und einer Verbindungsherstellungskonfiguration, wobei die Messanforderung (103) oder die Verbindungsherstellungskonfiguration von einer Sidelink-Steuervorrichtung (1200) erhalten wird, wobei die Sidelink-Steuervorrichtung (1200) eines der folgenden ist:
- eine Netzwerkvorrichtung;
- eine bedienerunabhängige Vorrichtung;
- eine weitere Sidelink-Vorrichtung und
Bereitstellen, durch die Sidelink-Vorrichtung (100), von Informationen (104) basierend auf den SL-QoS-Informationen (101) an die Sidelink-Steuervorrichtung (1200),
wobei sich die Messanforderung (103) oder die Verbindungsherstellungskonfiguration auf einen Dienst, der durch die Sidelink-Vorrichtung (100) betrieben wird, bezieht,
**dadurch gekennzeichnet, dass:**
die mindestens eine von: der Vorkonfiguration (102), der Messanforderung (103) oder der Verbindungsherstellungskonfiguration mindestens eines einschließt von:
- einem oder mehreren Dienstflussbezeichnern, die mit einem oder mehreren jeweiligen Dienstflüssen verknüpft sind;
- einem oder mehreren Linkbezeichnern, die mit einem oder mehreren jeweiligen Links verknüpft sind; und
- einem oder mehreren Trägerbezeichnern, die mit einem oder mehreren jeweiligen Trägern verknüpft sind,
wobei die Sidelink-Vorrichtung (100) konfiguriert ist, um die SL-QoS-Informationen (101) basierend auf dem einen oder den mehreren Dienstflussbezeichnern, dem einen oder den mehreren Linkbezeichnern oder dem einen oder den mehreren Trägerbezeichnern zu erhalten und
wobei der eine oder die mehreren Trägerbezeichner mit dem einen oder den mehreren Dienstflussbezeichnern verknüpft sind, wobei der eine oder die mehreren Trägerbezeichner Träger der Sidelink-Vorrichtung oder Träger einer Empfangsvorrichtung identifizieren und der eine oder die mehreren Dienstflussbezeichner Dienstflüsse der Sidelink-Vorrichtung oder einer Empfangsvorrichtung identifizieren.

## Revendications

1. Dispositif de liaison latérale (100) configuré pour :
obtenir des informations de qualité de service de liaison latérale, SL QoS, (101) sur la base : d'une préconfiguration (102) préstockée dans le dispositif de liaison latérale (100) et d'au moins une parmi une demande de mesure (103) et une configuration d'établissement de connexion, dans lequel la demande de mesure (103) ou la configuration d'établissement de connexion est obtenue à partir d'un dispositif de contrôle de liaison latérale (1200), le dispositif de contrôle de liaison latérale (1200) étant un parmi :
- un dispositif de réseau ;
- un dispositif indépendant d'opérateur ; et
- un autre dispositif de liaison latérale, et
le dispositif de liaison latérale (100) est en outre configuré pour fournir des informations (104) sur la base des informations SL QoS (101) au dispositif de contrôle de liaison latérale (1200),
**caractérisé en ce que** :
la demande de mesure (103) ou la configuration d'établissement de connexion se rapporte à un service qui est exploité par le dispositif de liaison latérale (100),
dans lequel l'au moins une parmi : la préconfiguration (102), la demande de mesure (103) ou la configuration d'établissement de connexion comporte au moins un parmi :
- un ou plusieurs identificateurs de flux de services associés à un ou plusieurs flux de services respectifs ;
- un ou plusieurs identificateurs de liaisons associés à une ou plusieurs liaisons respectives ; et
- un ou plusieurs identificateurs de supports associés à un ou plusieurs supports respectifs, dans lequel le dispositif de liaison latérale (100) est configuré pour obtenir les informations SL QoS (101) sur la base du ou des identificateurs de flux de services, du ou des identificateurs de liaison ou du ou des identificateurs de supports, et dans lequel le ou les identificateurs de supports sont associés à l'identificateur ou aux identificateurs de flux de services, le ou les identificateurs de supports identifiant des supports du dispositif de liaison latérale ou des supports d'un dispositif de réception, et le ou les identificateurs de flux de services identifiant des flux de services du dispositif de liaison latérale ou d'un dispositif de réception.

2. Dispositif de liaison latérale (100) selon la revendication 1, dans lequel le dispositif de liaison latérale (100) fournit les informations QoS de liaison latérale (101) au dispositif de contrôle de liaison latérale (1200) pour déterminer les métriques QoS de liaison latérale à partir des informations QoS de liaison latérale (101).

3. Dispositif de liaison latérale (100) selon la revendication 1 ou 2, dans lequel les informations SL QoS (101) sont obtenues sur la base d'une communication SL multidiffusion, monodiffusion et/ou diffusion qui est transmise, reçue et/ou observée au niveau du dispositif de liaison latérale (100).

4. Dispositif de liaison latérale (100) selon la revendication 1, configuré en outre pour obtenir, sur la base des informations SL QoS (101), une métrique SL QoS, et configuré en outre pour transmettre la métrique SL QoS au dispositif de contrôle de liaison latérale (1200), dans lequel le dispositif de liaison latérale (100) est configuré pour déterminer directement les métriques QoS de liaison latérale selon la demande de mesure (103) qui est reçue à partir du dispositif de contrôle de liaison latérale (1200) et/ou sur la base de la préconfiguration (102) du dispositif de liaison latérale (100) et/ou de la configuration d'établissement de connexion.

5. Dispositif de liaison latérale (100) selon l'une quelconque des revendications précédentes, dans lequel l'au moins une parmi : la préconfiguration (102), la demande de mesure (103) ou la configuration d'établissement de connexion comporte un ou plusieurs identificateurs, ID, d'un ou plusieurs dispositifs de liaison latérale, et dans lequel le dispositif de liaison latérale (100) est configuré pour obtenir les informations SL QoS (101) sur la base de l'ID.

6. Dispositif de liaison latérale (100) selon l'une quelconque des revendications précédentes, comprenant en outre au moins une parmi : la préconfiguration (102) ; la demande de mesure (103) ; et la configuration d'établissement de connexion, qui comporte des informations concernant un emplacement géographique et/ou une distance géographique, et dans lequel le dispositif de liaison latérale (100) est en outre configuré pour obtenir les informations SL QoS (101) sur la base de l'emplacement géographique et/ou de la distance géographique.

7. Dispositif de liaison latérale (100) selon la revendication précédente, dans lequel la préconfiguration (102), la demande de mesure (103) ou la configuration d'établissement de connexion comporte des informations relatives à la distance géographique, et dans lequel la distance géographique est une distance entre le dispositif de liaison latérale (100) et un autre dispositif de liaison latérale qui est pris en compte pour obtenir les informations SL QoS.

8. Dispositif de contrôle de liaison latérale (1200), configuré pour :
- transmettre une demande de mesure (1202) et/ou une configuration d'établissement de connexion à un dispositif de liaison latérale (100), dans lequel la demande de mesure (103) ou la configuration d'établissement de connexion se rapporte à un service qui est exploité par le dispositif de liaison latérale (100),
- obtenir des informations de qualité de service de liaison latérale, SL QoS, (1203) à partir du dispositif de liaison latérale (100), les informations SL QoS (1203) étant basées sur une préconfiguration (102) préstockée dans le dispositif de liaison latérale (100) et au moins une de la demande de mesure (1202) et de la configuration d'établissement de connexion, et
- obtenir une métrique SL QoS (1201) sur la base des informations SL QoS (1203) reçues,
**caractérisé en ce que** :
l'au moins une parmi : la préconfiguration (102), la demande de mesure (103) ou la configuration d'établissement de connexion comporte au moins un parmi :
- un ou plusieurs identificateurs de flux de services associés à un ou plusieurs flux de services respectifs ;
- un ou plusieurs identificateurs de liaisons associés à une ou plusieurs liaisons respectives ; et
- un ou plusieurs identificateurs de supports associés à un ou plusieurs supports respectifs, dans lequel le dispositif de liaison latérale (100) est configuré pour obtenir les informations SL QoS (101) sur la base du ou des identificateurs de flux de services, du ou des identificateurs de liaisons ou du ou des identificateurs de supports, et dans lequel le ou les identificateurs de supports sont associés à l'identificateur ou aux identificateurs de flux de services, le ou les identificateurs de supports identifiant des supports du dispositif de liaison latérale ou des supports d'un dispositif de réception, et le ou les identificateurs de flux de services identifiant des flux de services du dispositif de liaison latérale ou d'un dispositif de réception.

9. Dispositif de contrôle de liaison latérale (1200) selon la revendication 8, dans lequel la demande de mesure (1202) et/ou la configuration d'établissement de connexion se rapporte à un service qui est exploité par un dispositif de liaison latérale (100).

10. Dispositif de contrôle de liaison latérale (1200) selon la revendication 8 ou 9, configuré pour comporter une demande pour la métrique SL QoS (1201) dans la demande de mesure (1202) et/ou la configuration d'établissement de connexion.

11. Dispositif de contrôle de liaison latérale (1200) selon l'une quelconque des revendications 8 à 10, dans lequel la demande de mesure (1202) et/ou la configuration d'établissement de connexion comporte un ou plusieurs identificateurs, ID, de dispositifs de liaison latérale, dans lequel les dispositifs de liaison latérale se rapportent à une certaine session SL.

12. Dispositif de contrôle de liaison latérale (1200) selon l'une quelconque des revendications 8 à 11, comprenant en outre au moins une parmi : la préconfiguration (102) ; la demande de mesure (103) ; et la configuration d'établissement de connexion, qui comporte des informations concernant un emplacement géographique et/ou une distance géographique, et dans lequel le dispositif de liaison latérale (100) est en outre configuré pour obtenir les informations SL QoS (101) sur la base de l'emplacement géographique et/ou de la distance géographique.

13. Dispositif de contrôle de liaison latérale (1200) selon la revendication 12, dans lequel la demande de mesure (1202) ou la configuration d'établissement de connexion comporte les informations relatives à l'emplacement géographique et/ou à la distance géographique.

14. Dispositif de contrôle de liaison latérale (1200) selon l'une quelconque des revendications 9 à 13, configuré pour obtenir des informations sur la base d'informations SL QoS (1203) et pour fournir une métrique SL QoS et/ou des informations SL QoS, sur la base des informations obtenues, à un autre dispositif de liaison latérale et/ou à un autre dispositif de contrôle de liaison latérale.

15. Programme informatique avec un code de programme pour :
obtenir, par un dispositif de liaison latérale (100), des informations de qualité de service de liaison latérale, SL QoS, (101) sur la base : d'une préconfiguration (102) préstockée dans le dispositif de liaison latérale (100) et d'au moins une parmi : une demande de mesure (103) et une configuration d'établissement de connexion, dans lequel la demande de mesure (103) ou la configuration d'établissement de connexion est obtenue à partir d'un dispositif de contrôle de liaison latérale (1200), le dispositif de contrôle de liaison latérale (1200) étant un parmi :
- un dispositif de réseau ;
- un dispositif indépendant d'opérateur ;
- un autre dispositif de liaison latérale, et
fournir, par le dispositif de liaison latérale (100), des informations (104) sur la base des informations SL QoS (101) au dispositif de contrôle de liaison latérale (1200), dans lequel la demande de mesure (103) ou la configuration d'établissement de connexion se rapporte à un service qui est exploité par le dispositif de liaison latérale (100),
**caractérisé en ce que** :
l'au moins une parmi : la préconfiguration (102), la demande de mesure (103) ou la configuration d'établissement de connexion comporte au moins un parmi :
- un ou plusieurs identificateurs de flux de services associés à un ou plusieurs flux de services respectifs ;
- un ou plusieurs identificateurs de liaisons associés à une ou plusieurs liaisons respectives ; et
- un ou plusieurs identificateurs de supports associés à un ou plusieurs supports respectifs, dans lequel le dispositif de liaison latérale (100) est configuré pour obtenir les informations SL QoS (101) sur la base du ou des identificateurs de flux de services, du ou des identificateurs de liaisons ou du ou des identificateurs de supports, et dans lequel le ou les identificateurs de supports sont associés à l'identificateur ou aux identificateurs de flux de services, le ou les identificateurs de supports identifiant des supports du dispositif de liaison latérale ou des supports d'un dispositif de réception, et le ou les identificateurs de flux de services identifiant des flux de services du dispositif de liaison latérale ou d'un dispositif de réception.
